(19) Europäisches Patentamt
European Patent Office
Office européen des brevets

(11) Veröffentlichungsnummer: **0 182 931**
**B1**

(12) **EUROPÄISCHE PATENTSCHRIFT**

(45) Veröffentlichungstag der Patentschrift: **28.02.90**

(51) Int. Cl.[5]: **C 01 F 5/02**

(21) Anmeldenummer: **84114353.0**

(22) Anmeldetag: **27.11.84**

(54) **Verfahren zum Herstellen von hochreinem Magnesiumoxid.**

(43) Veröffentlichungstag der Anmeldung:
**04.06.86 Patentblatt 86/23**

(45) Bekanntmachung des Hinweises auf die Patenterteilung:
**28.02.90 Patentblatt 90/09**

(84) Bennante Vertragsstaaten:
**AT CH DE GB IT LI**

(56) Entgegenhaltungen:
**GB-A-471 234**
**GB-A-2 051 759**
**US-A-1 537 479**
**US-A-1 778 659**

**CHEMICAL ABSTRACTS, Band 39, Nr. 13, 10. Juli 1945, Spalten 3401-3402-7, Columbus, Ohio, US; J.M. AVERY u.a.: "Modified MgO process yields MgCl2 and CaOCl2"**

(73) Patentinhaber: **GEBRÜDER SULZER AKTIENGESELLSCHAFT**
**Zürcherstrasse 9**
**CH-8401 Winterthur (CH)**

(72) Erfinder: **Ainscow, William Stuart**
**Löwenstrasse 23**
**CH-8400 Winterthur (CH)**
Erfinder: **Gadgil, Balkrishna Bhaskar**
**Im Heidenloch 5**
**CH-8352 Räterschen (CH)**

(74) Vertreter: **Sparing Röhl Henseler Patentanwälte**
**European Patent Attorneys**
**Rethelstrasse 123**
**D-4000 Düsseldorf 1 (DE)**

**EP 0 182 931 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft ein Verfahren zum Herstellen von hochreinem Magnesiumoxid aus einem magnesithaltigen Erz, insbesondere einem magnesiumkarbonathaltigen Erz, dessen Verunreinigungen auch Kalziumverbindungen aufweisen, wobei das Erz kalziniert und das dabei entstandene Magnesiumoxid in einer Laugstufe zum Magnesiumchlorid umgesetzt wird, und aus der Magnesiumchloridlösung in einer Fällstufe Magnesiumkarbonat-Trihydrat unter Bildung von Ammoniumchlorid ausgefällt wird, und weiterhin aus dem Ammoniumchlorid in einer Ammoniak-Rückgewinnungsstufe Ammoniak zurückgewonnen wird, und das ausgefällte Magnesiumkarbonat-Thrihydrat abfiltriert, gewaschen, getrocknet und zum Magnesiumoxid kalziniert wird.

Ein aus der GB-A-2 051 759 bekanntes Verfahren weist den Nachteil auf, dass es ziemlich viel Verfahrensstufen erfordert, so dass die Anlage zum Durchführen des Verfahrens aufwendig ist.

Der Erfindung liegt die Aufgabe zugrunde, ein Verfahren der eingangs definierten Art zu schaffen, das weniger Verfahrensstufen erfordert und daher wirtschaftlicher ist. Diese Aufgabe wird gemäss der Erfindung durch die im Kennzeichen des Patentanspruchs 1 angegebenen Merkmale gelöst. Den abhangige Anspruch 2 betrifft eine vorteilhafte Weiterbildung des Anspruchs 1.

So ist gegenüber der britischen Publikation bei der Erfindung kein Kalzinierungs-Ofen erforderlich, in welchem aus $CaCO_3$ CaO entsteht. Ein derartiger Hochtemperatur-Ofen verteuert jedoch die Gesamtanlage wesentlich, während Fällungs- und Filtereinrichtungen in apparativer Hinsicht relativ einfache Bauelemente, wie Filterpressen oder Fällungsbehälter sind, die um ein mehrfaches billiger als ein Kalzinierungs-Ofen sind.

Ein Ausführungsbeispiel des Erfindungsgegenstandes ist nachfolgend anhand der einzigen Zeichnung, die ein Fliessschema einer Anlage zum Durchführen des Verfahrens zeigt, beschrieben.

Das Rohmaterial, z. B. Magnesiterz ($MgCO_3$), gelangt bereits gemahlen über einen Weg 1 in die Anlage. In praktisch allen Fällen enthält das Erz erhebliche Mengen von Verunreinigungen, hauptsächlich $SiO_2$ $Fe_2O_3$, $Al_2O_3$ sowie auch Kalziumverbindungen, z. B. Kalziumkarbonat ($CaCO_3$). Das Magnesiterz wird in einem Ofen 2 kalziniert, wobei Magnesiumoxid entsteht. Das Magnesiumoxid enthält noch die erwähnten Verunreinigungen. Das Magnesiumoxid gelangt über einen Weg 3 in eine Rückgewinnungsvorrichtung 4 für Ammoniak. In dieser Rückgewinnungsvorrichtung wird das Magnesiumoxid zwecks Laugung kontinuierlich einer Ammoniumchloridlösung ($NH_4Cl$) zugeführt, in der das Magnesiumoxid langsam aufgelöst wird nach der Gleichung:

$$MgO + 2NH_4Cl \rightarrow 2NH_3 + MgCl_2 + H_2O$$

Die Ammoniumchloridlösung entstammt einer Fällstufe 5 für Magnesiumkarbonat-Trihydrat, die nachfolgend noch besprochen werden wird. Die Ammoniumchloridlösung fliesst über eine Leitung 6 zu. Das bei der Laugung gebildete Ammoniak ($NH_3$) wird durch Zuführen von Wasserdampf bei 7 aus dem Reaktionsgemisch entfernt. Die Kalziumverbindungen, die im Magnesiterz vorhanden waren, werden gleichzeitig in der Rückgewinnungsvorrichtung 4 gelaugt unter Bildung von Ammoniak und Kalziumchlorid nach der Gleichung:

$$2NH_4Cl + CaO \rightarrow 2NH_3 + CaCl_2 + H_2n$$

Das anfallende Kalziumchlorid muss entfernt werden, da es sonst in das angestrebte Endprodukt, hochreines Magnesiumoxid, enthalten sein würde. Um das Kalziumchlorid zu entfernen wird es zusammen mit dem Magnesiumchlorid aus der Rückgewinnungsstufe 4 über einen Weg 8 einer anschliessenden, weiteren Fällstufe 9 zugeführt und darin mit Magnesiumoxid aus der Kalzinierstufe 2 und mit Kohlendioxid ($CO_2$) zusammengeführt, wobei ebenfalls Magnesiumchlorid ($MgCl_2$) entsteht und Kalziumkarbonat ($CaCO_3$) ausgefällt wird nach der Gleichung:

$$MgO + CaCl_2 + CO_2 \rightarrow MgCl_2 + CaCO_3$$

Da jedoch die Konzentration des mit dem Magnesiumchlorid mitgeführten Kalziumchlorids nur sehr gering ist verläuft die Reaktion nur langsam und eine lange Verweilzeit in der Fällstufe 9 wäre notwendig. Es hat sich nun herausgestellt, dass durch Hinzufügen von weiterem Kalziumchlorid die Geschwindigkeit der Reaktion stark erhöht wird, so dass die Verweilzeit der Lauge in der Fällstufe 9 erheblich kürzer ist. Das verwendete Kalziumchlorid entstammt einer Fremdquelle und wird bei 10 in die Fällstufe 9 eingeführt. Bei der Reaktion darf nur so viel Kohlendioxid eingeleitet werden, dass der pH-Wert nicht unter 5,5 sinkt, ansonsten die Reaktion irreversibel zum Stillstand kommt, auch wenn noch so viel Magnesiumoxid ungelöst ist. Wenn nötig kann rohes Magnesiumoxid nachdosiert werden. In der Lösung mit ca. 15 % Magnesiumchlorid sind das gefällte Kalziumkarbonat und die Verunreinigungen suspendiert. Die Suspension gelangt über einen Weg 11 auf einen Filter 12, wo der Feststoff der Suspension, bestehend aus Kalziumkarbonat vermischt mit Verunreinigungen und etwas Magnesiumkarbonat, über einen Weg 13 abgezogen wird. Die verbleibende klare Magnesiumchloridlösung fliesst über einen Weg 14 in die Fällvorrichtung 5, in der unter Zugabe von Ammoniumkarbonat Magnesiumkarbonat-Trihydrat ($MgCO_3 \cdot 3H_2O$) gebildet wird, nach der Reaktion:

$$MgCl_2 + (NH_4)_2CO_3 + 3H_2O \rightarrow MgCO_3 \cdot 3H_2O + 2NH_4Cl$$

Das Ammoniumkarbonat wird in einer Absorptionsvorrichtung 15 zubereitet, in der das in der Rückgewinnungsstufe 4 gebildete Ammoniak und

Kohlendioxid in Wasser gelöst werden. Das Ammoniak wird über einen Weg 4' zugeführt. Das Wasser wird bei 16 zugeführt. Das Ammoniumkarbonat wird über einen Weg 15' der Fällvorrichtung 5 zugeleitet. In der Fällvorrichtung 5 wird die Temperatur im Bereich von 25° auf 45° C gehalten. Der pH-Wert beträgt 7,5 bis 8,5. Der Druck ist atmosphärisch. Der Kristallbrei gelangt kontinuierlich über einen Weg 17 in eine Trenn- und Waschvorrichtung 18, in der der Brei von der mitgeströmten Lösung getrennt wird. Die verbleibende, klare Lösung, die hauptsächlich aus Ammoniumchlorid besteht, fliesst über einen Weg 19 ab. Ein Teil der Lösung wird über einen Weg 20 in die Fällstufe 5 zurückgeführt. Der Rest der Lösung strömt über den bereits erwähnten Weg 6 in die kombinierte Rückgewinnungsstufe für Ammoniak und Laugstufe 4. Durch die Wahl der über den Weg 20 strömenden Menge der beiden Ströme kann im Kreislauf die für das Verfahren optimale Feststoffkonzentration eingestellt werden.

Der in der Trenn- und Waschvorrichtung anfallende Feststoff, bestehend aus Magnesiumkarbonat-Trihydrat-Kristalle und Mutterlauge, wird mit möglichst wenig Wasser im Gegenstrom gewaschen, d.h. von der Mutterlauge befreit. Das Wasser wird bei 21 zugeführt.

Der gewaschene Feststoff, der nur noch aus reinen Magnesiumkarbonat-Trihydrat-Kristalle und Feuchte besteht, gelangt über einen Weg 22 in eine Trocknungs- und Zersetzungsvorrichtung 23, wo er zersetzt wird. Dabei wird Kohlendioxid frei, das über einen Weg 24 zum Teil in die Absorptionsvorrichtung 15 und zum Teil in die Fällvorrichtung für Kalziumkarbonat 9 geleitet wird. Das verbleibende Magnesiumoxid fliesst über einen Weg 25 ab.

## Patentansprüche

1. Verfahren zum Herstellen von hochreinem Magnesiumoxid aus einem magnesithaltigen Erz, dessen Verunreinigungen auch Kalziumverbindungen aufweisen, wobei das Erz kalziniert und das dabei entstandene Magnesiumoxid in einer Laugstufe zu Magnesiumchlorid umgesetzt wird, und aus der Magnesiumchloridlösung in einer Fällstufe Magnesiumkarbonat-Trihydrat unter Bildung von Ammoniumchlorid ausgefällt wird, und weiterhin aus dem Ammoniumchlorid in einer Ammoniak-Rückgewinnungsstufe Ammoniak zurückgewonnen wird, und dass das ausgefällte Magnesiumkarbonat-Trihydrat abfiltriert, gewaschen, getrocknet und zu Magnesiumoxid kalziniert wird, dadurch *gekennzeichnet*, dass die Laugung des Magnesiumoxids zu Magnesiumchlorid in der Ammoniak-Rückgewinnungsstufe stattfindet, wobei das bei der Laugung entstandene Magnesiumchlorid und Kalziumchlorid einer zweiten Fällstufe zugeführt werden, in der das Kalziumchlorid durch Zugabe von Magnesiumoxid und weiterem Kalziumchlorid zu Magnesiumchlorid umgesetzt wird, unter Ausfällung von Kalziumkarbonat, und das gesamte Magnesiumchlorid der Fällstufe für Magnesiumkarbonat-Trihydrat zugeführt wird.

2. Verfahren nach Anspruch 1, dadurch gekennzeichnet, dass das zurückgewonnene Ammoniak zusammen mit Kohlendioxid zwecks Bildung von Ammoniumkarbonat einer Absorptionsstufe zugeführt wird, welches Ammoniumkarbonat der Fällstufe für Magnesiumkarbonat-Trihydrat zugeführt wird.

## Claims

1. A method of producing high-purity magnesium oxide from a magnesite-containing ore also containing calcium compounds as impurities, the ore being calcined, the resulting magnesium oxide being converted to magnesium chloride in a leaching step, magnesium carbonate trihydrate being precipitated from the magnesium chloride solution in a precipitation step with evolution of ammonium chloride, ammonia being recovered from the ammonium chloride in an ammonia recovery step, and the precipitated magnesium carbonate trihydrate being filtered, washed, dried and calcined to magnesium oxide, characterised in that the magnesium oxide is leached to magnesium chloride in the ammonia recovery step, the magnesium chloride and calcium chloride obtained during leaching being supplied to a second precipitation step in which the calcium chloride is converted to magnesium chloride by adding magnesium oxide and additional calcium chloride, with precipitation of calcium carbonate, and all the magnesium chloride is supplied to the step precipitating magnesium carbonate trihydrate.

2. A method according to claim 1, characterised in that the recovered ammonia is supplied together with carbon dioxide to an absorption step for forming ammonium carbonate, which is supplied to the step for precipitating magnesium carbonate trihydrate

## Revendications

1. Procédé de production d'oxyde de magnésium de grande pureté à partir d'un minerai contenant de la magnésite, dont les impuretés présentent aussi des composés de calcium, dans lequel le minerai est calciné et l'oxyde de magnésium qui est alors produit est converti dans une étape de lixiviation en chlorure de magnésium, et dans une étape de précipitation, le carbonate de magnésium trihydraté est précipité dans la solution de chlorure de magnésium avec formation de chlorure d'ammonium, et en outre de l'ammoniac est récupéré du chlorure d'ammonium dans une étape de récupération de l'ammoniac, et le carbonate de magnésium trihydraté précipité est séparé par filtration, lavé, séché et calciné en oxyde de magnésium, caractérisé en ce que la

lixiviation de l'oxyde de magnésium en chlorure de magnésium est effectuée dans l'étape de récupération d'ammoniac, de façon telle que le chlorure de magnésium et le chlorure de calcium produits lors de la lixiviation sont envoyés à une seconde opération de précipitation dans laquelle le chlorure de calcium est transformé en chlorure de magnésium par addition d'oxyde de magnésium et d'un complément de chlorure de calcium, avec précipitation de carbonate de calcium, et le chlorure de magnésium total est envoyé à l'étape de précipitation pour le carbonate de magnésium trihydraté.

2. Procédé suivant la revendication 1, caractérisé en ce que l'ammoniac récupéré est envoyé à une opération d'absorption avec de l'anhydride carbonique en vue de former du carbonate d'ammonium, lequel est envoyé à l'étape de précipitation pour le carbonate de magnésium trihydraté.

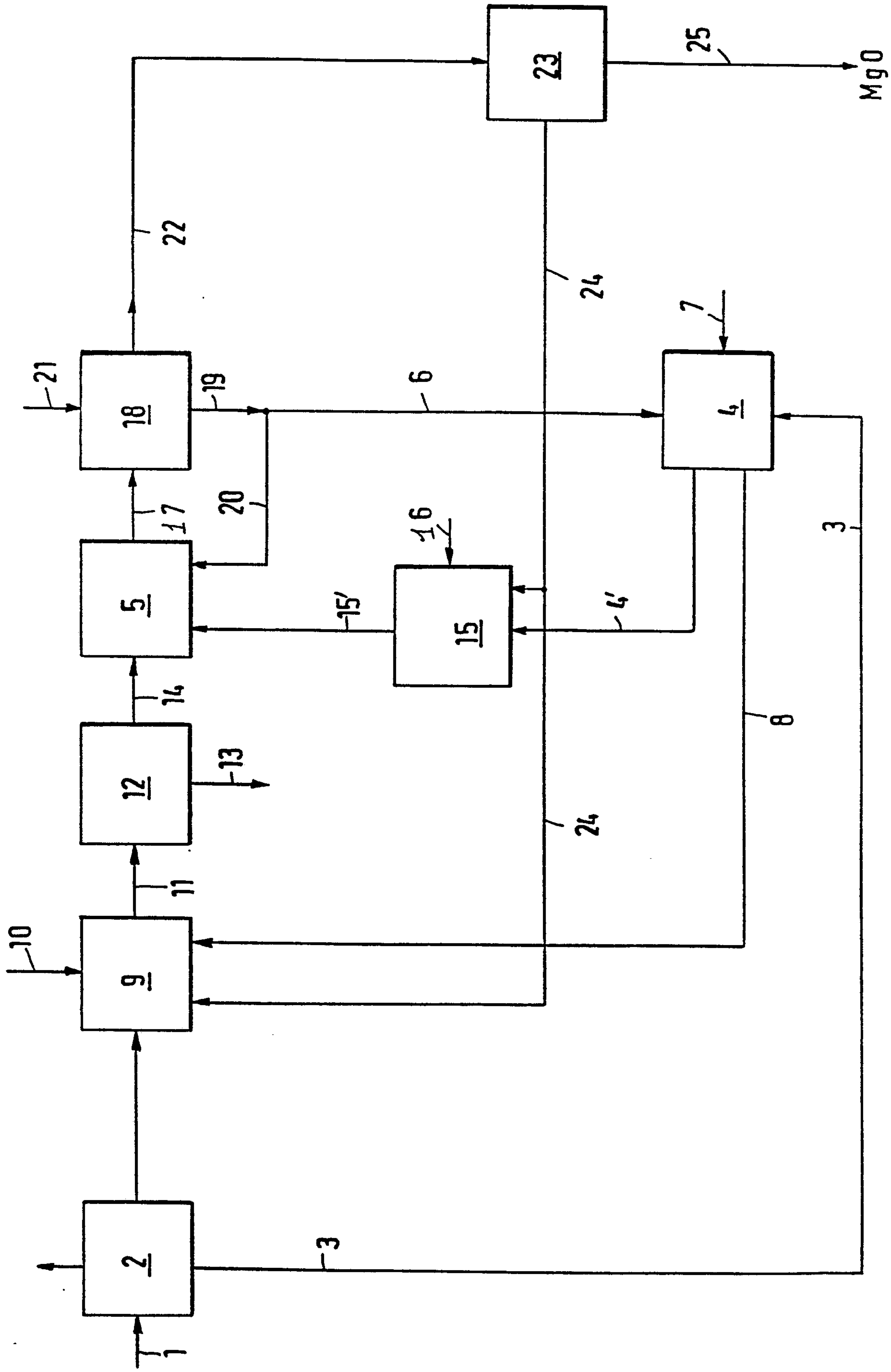
1
2
3
9
10
11
12
13
14
5
15
15'
16
4
4'
6
7
8
17
18
19
20
21
22
23
24
25
MgO